# EUROPÄISCHE PATENTSCHRIFT

(11) **EP 2 207 844 B1**
(45) Veröffentlichungstag und Bekanntmachung des Hinweises auf die Patenterteilung: **03.07.2013**
(21) Anmeldenummer: 08845390.7
(22) Anmeldetag: 18.10.2008
(51) Int. Cl.: C08K 5/053, C08K 5/06, C08K 5/42, C08K 5/43, C08K 5/435, C08L 69/00, C08L 71/02

(54) **FLAMMWIDRIGE POLYCARBONATE MIT POLYOLEN**
FLAME-RETARDANT POLYCARBONATES COMPRISING POLYOLS
POLYCARBONATES RÉSISTANT À LA FLAMME, CONTENANT DES POLYOLS

(30) Priorität: 02.11.2007 DE 102007052783
(43) Veröffentlichungstag der Anmeldung: 21.07.2010
(73) Patentinhaber: Bayer Intellectual Property GmbH, 40789 Monheim (DE)
(72) Erfinder: KRAUTER, Berit, 41464 Neuss (DE); EBERT, Wolfgang, 47800 Krefeld (DE); PREIN, Michael, 47809 Krefeld (DE); WAGNER, Michael, 47443 Moers (DE)
(74) Vertreter: BIP Patents
(86) Internationale Anmeldenummer: PCT/EP2008/008836
(87) Internationale Veröffentlichungsnummer: WO 2009/056241

(56) Entgegenhaltungen:
- WO-A-2007/093513
- US-A- 6 166 116
- US-A1- 2007 191 519
- DATABASE WPI Week 199038 Thomson Scientific, London, GB; AN 1990-286963 XP002508362 & JP 02 202544 A (NIPPON GE PLASTICS KK) 10. August 1990 (1990-08-10) in der Anmeldung erwähnt

## Beschreibung

Die vorliegende Erfindung betrifft Zusammensetzungen enthaltend Polycarbonat, sowie eine Kombination von Polyol und Alkali- oder Erdalkalisalz einer aliphatischen oder aromatischen Sulfonsäure in bestimmten Mengen.

Flammfest ausgerüstete Kunststoffformmassen werden für eine Vielzahl von Anwendungen eingesetzt. Typische Einsatzgebiet solcher Kunststoffe ist unter anderem die Elektrotechnik und Elektronik, wo sie beispielsweise zur Herstellung von Trägern spannungsführender Teile oder in Form von Femseh- und Monitorgehäusen eingesetzt werden. Aber auch im Bereich der Innenverkleidungen von Schienenfahrzeugen oder Flugzeugen haben flammwidrig ausgerüstete Kunststoffe ihren festen Platz gefunden. Hierbei müssen die verwendeten Kunststoffe neben guten Flammschutzeigenschaften auch weitere positive Eigenschaften auf hohem Niveau zeigen.

In der Vergangenheit hat es nicht an Versuchen gemangelt, die Flammwidrigkeit von Kunststoffen weiter zu erhöhen.

Die JP-A 02-202544 umfasst Zusammensetzungen enthaltend aromatische Sulfonsäuremetallsalze in Mengen von 0,01 bis 2, bevorzugt 0,05 bis 1,5 Gew-Teile und 0,01 bis 3,0, bevorzugt 0,01 bis 2,0 Gew.Teile (jeweils bezogen auf 100 Gew.Teile Polycarbonat) Alkylenglycololigomere sowie Spritzgußartikel hieraus mit einer verbesserten Flammwidrigkeit sowie einer guten Transparenz und reduzierter Neigung zu Farbveränderungen. Die Aufgabe dieser Anmeldung war die Bereitstellung von flammgeschützten transparenten Polycarbonat (PC)-Zusammensetzungen. Es wurde gefunden, dass eine Kombination von Polyalkylenglykol mit einem Molekulargewicht von 200 bis 1000 mit einem Metallsalz einer aromatischen Sulfonsäure eine flammgeschützte transparente PC-Zusammensetzung liefert.

JP-A 02-202544 weist ausdrücklich darauf hin, dass die Transparenz von Zusammensetzungen, die Polyalkylenglykol mit einem Molekulargewicht > 1000 enthalten, abnimmt. Die Anmeldung beschreibt Polycarbonat-Zusammensetzungen, die 0,1 Gew. % Kaliumdiphenylsulfonat und 0,3 Gew. % Polyethylenglykol mit einem Molekulargewicht von 600 bzw. 3400 enthalten (Beispiele) .

US 2006/0116467 A1 beschreibt ein Verfahren zur Herstellung flammgeschützter thermoplastischer Formmassen unter Verwendung wässriger PTFE-Dispersionen.

EP-A 0 374 816 betrifft ein Verfahren zur Dispergierung eines oder mehrerer Flammschutzadditive in Carbonatpolymeren zur Verbesserung der Schtagzäheigenschaften des flammgeschützten Polymers.

In der US 2007/0129465 A1 werden Zusammensetzungen aus organischen Polymeren beschrieben, in denen oberflächenmodifizierte Partikel in einer Menge dispergiert sind, die geeignet ist, die Entflammbarkeit des Polymers zu reduzieren.

US 6,469,072 B1 offenbart eine Methode zur Dispergierung fester Additive in Polymeren mit Hilfe von Mischern.

US 6,455,620 B1 legt Zusammensetzungen offen, die einen Oxidations-Katalysator und wenigstens einen Polyether aus der Gruppe der Polyalkylenglycole enthalten.

US-A 3215663 beschreibt einen Prozess zur Dispergierung von Pigmenten in linearen synthetischen Polymeren mit hohem Molekulargewicht.

In der US-A 5118721 wird ein Verfahren zur Herstellung von Füllstoffdispersionen unter Verwendung von Polyetherpolyolen beschrieben.

US 6.166.116 beschreibt Polycarbonatzusammensetzungen, die gegen Verfärhung und Verschlechterung physikalischer Eigenschaften während der Sterilization durch ionisierende Strahlung stabilisiert sind. Die Zusammensetzungen enthalten Polycarbonat ein Polyoxyalkylene-Derivat und freie Di-Sulfonimide gemäß der angegebenen Formel, die als Stabilisator fungieren.

Trotz aller bisherigen Bemühungen besteht nach wie vor ein Bedarf nach in ihrer Flammwidrigkeit weiter verbesserten Zusammensetzungen insbesondere zur Anwendung in dünnwandigen Erzeugnissen. Dies gilt in ganz besonderem Maße für transparente Zusammensetzungen bzw. für transparente Erzeugnisse. In diesem Zusammenhang war es eine Aufgabe der vorliegenden Erfindung, transparente Zusammensetzungen bereitzustellen, welche eine deutlich verbesserte Flammwidrigkeit bei Wandstärken kleiner gleich 3 mm aufweisen.

Im Rahmen der vorliegenden Erfindung wurde gefunden, dass die Ausrüstung von Zusammensetzungen enthaltend Polycarbonat mit einer Kombination aus Alkali- oder Erdalkalisalz einer aliphatischen oder aromatischen Sulfonsäure und geringen Mengen Polyol ein ausgezeichnetes Eigenschaftsbild hinsichtlich Transparenz und Flammschutz aufweisen, insbesondere bei Polyolen mit einem Molekulargewicht > 1000 bei insgesamt geringer Konzentration an Flammschutzadditiv und Polyol. Die vorliegende Erfindung betrifft daher eine Zusammensetzung enthaltend Polycarbonat und 0,01 Gew-% bis < 0,3, Gew-% Polyol und 0,01 Gew-% bis 0,8 Gew-% eines Alkali- oder Erdalkalisalz einer aliphatischen oder aromatischen Sulfonsäure. .

Solche Zusammensetzungen lassen sich in diversen Anwendungen vorteilhaft einsetzen. Hierzu zählen beispielsweise Anwendungen im Elektro-/Elektronikbereich wie zum Beispiel Lampengehäuse, Elektroschutzschalter, Steckerleisten oder Fernseh- beziehungsweise Monitorgehäuse. Darüber können die erfindungsgemäßen Zusammensetzungen in Form von Platten für Architektur-oder Industrieverscheibungen, als Verkleidungen von Schienenfahrzeug- und Flugzeuginnenräumen, an die jeweils erhöhte Anforderungen an die Flammwidrigkeit gestellt werden, eingesetzt werden.

Die vorliegende Erfindung betrifft auch ein Verfahren zur Herstellung einer erfindungsgemäßen Zusammensetzung, dadurch gekennzeichnet dass Polycarbonat, mindestens ein Polyol und mindestens ein Alkali- oder Erdalkalisalz einer jeweils aliphatischen oder aromatischen Sulfonsäure, eines Sulfonamids oder eines Sulfonimids zusammengeführt und vermischt werden, gegebenenfalls in Lösungsmittel, wobei gegebenenfalls homogenisiert wird und das Lösungsmittel entfernt wird. Ausschließend wird das Polymercompound beispielsweise granuliert und direkt zu Formteilen weiterverarbeitet.

Polycarbonate für die erfindungsgemäßen Zusammensetzungen sind Homopolycarbonate, Copolycarbonate und thermoplastische, vorzugsweise aromatische, Polyestercarbonate, die in der vorliegenden Anmeldung unter der Bezeichnung "Polycarbonat" subsumiert werden..

Die erfindungsgemäßen Homopolycarbonate, Copolycarbonate und Polyestercarbonate haben im Allgemeinen mittlere Molekulargewichte (Gewichtsmittel) von 2 000 bis 200 000, bevorzugt 3 000 bis 150 000, insbesondere 5 000 bis 100 000, ganz besonders bevorzugt 8 000 bis 80 000, insbesondere 12 000 bis 70 000 (bestimmt nach GPC mit Polycarbonat-Eichung), ganz besonders bevorzugt mittlere Molekulargewichte M̅_{w} von 16.000 bis 40.000 g/mol.

Zur Herstellung von Polycarbonaten für die erfindungsgemäßen Zusammensetzungen sei beispielhaft auf "Schnell", Chemistry and Physics of Polycarbonats, Polymer Reviews, Vol. 9, Interscience Publishers, New York, London, Sydney 1964, auf D.C. PREVORSEK, B.T. DEBONA and Y. KESTEN, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und schließlich auf Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen. Die Herstellung erfolgt vorzugsweise nach dem Phasengrenzflächenverfahren oder dem Schmelze-Umesterungsverfahren und wird zunächst beispielhaft an dem Phasengrenzflächenverfahren beschrieben.

Als Ausgangsverbindungen bevorzugt einzusetzende Verbindungen sind Bisphenole der allgemeinen Formel (1) HO-Z-OH, worin Z ein divalenter organischer Rest mit 6 bis 30 Kohlenstoffatomen ist, der eine oder mehrere aromatische Gruppen enthält.

Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)-sulfone, Bis(hydroxyphenyl)ketone und α,α'-Bis(hydroxyphenyl)-diisopropylbenzole gehören.

Besonders bevorzugte Bisphenole, die zu den vorgenannten Verbindungsgruppen gehören, sind Bisphenol-A, Tetraalkylbisphenol-A, 4,4-(meta-Phenylendiisopropyl)diphenol (Bisphenol M), 4,4-(para-Phenylendiisopropyl)diphenol, N-Phenyl-Isatinbisphenol, 1,1-Bis-(4-hydroxyphenyl)-3,3,5-trimethylcyclohexan (BP-TMC), Bisphenole vom Typ der 2-Hydrocarbyl-3,3-bis(4-hydroxya-ryl)phthalimidine, insbesondere 2-Phenyl-3,3-bis(4-hydroxyphenyl)phthalimidin, sowie gegebenenfalls deren Gemische. Besonders bevorzugt sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan. Die erfindungsgemäß einzusetzenden Bisphenolverbindungen werden mit Kohlensäureverbindungen, insbesondere Phosgen oder beim Schmelzeumesterungsprozess Diphenylcarbonat bzw. Dimethylcarbonat, umgesetzt.

Polyestercarbonate werden durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsäure, Isophthalsäure, 3,3'-oder 4,4'-Diphenyldicarbonsäure und Benzophenondicarbonsäuren. Ein Teil, bis zu 80 Mol-%, vorzugsweise von 20 bis 50 Mol-% der Carbonatgruppen in den Polycarbonaten können durch aromatische Dicarbonsäureester-Gruppen ersetzt sein.

Beim Phasengrenzflächenverfahren verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol. Vorzugsweise werden Chlorbenzol oder Dichlormethan bzw. Gemische aus Dichlormethan und Chlorbenzol eingesetzt.

Die Phasengrenzflächenreaktion kann durch Katalysatoren wie tertiäre Amine, insbesondere N-Alkylpiperidine oder Oniumsalze beschleunigt werden. Bevorzugt werden Tributylamin, Triethylamin und N-Ethylpiperidin verwendet. Im Falle des Schmelzeumesterungsprozesses werden die in DE-A 42 38 123 genannten Katalysatoren verwendet.

Die Polycarbonate können durch den Einsatz geringer Mengen Verzweiger bewusst und kontrolliert verzweigt werden. Einige geeignete Verzweiger sind: Isatinbiskresol, Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan; Tri-(4-hydroxyphenyl)-phenylmethan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; α,α',α"-Tris-(4-hydroxyphenyl)-1,3 ,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere: 1,1,1-Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern bzw. Mischungen der Verzweigern, können mit den Diphenolen zusammen eingesetzt werden aber auch in einem späteren Stadium der Synthese zugegeben werden.

Es können Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet in Mengen von 1-20 Mol-%, bevorzugt 2-10 Mol-%, je Mol Bisphenol. Bevorzugt sind Phenol, 4-tert.-Butylphenol bzw. Cumylphenol.

Kettenabbrecher und Verzweiger können getrennt oder aber auch zusammen mit dem Bisphenol den Synthesen zugesetzt werden.

Das erfindungsgemäß bevorzugte Polycarbonat ist Bisphenol-A-Homopolycarbonat.

Alternativ können die erfindungsgemäßen Polycarbonate auch nach dem Schmelzumesterungsverfahren hergestellt werden. Das Schmelzumesterungsverfahren ist beispielsweise in der Encyclopedia of Polymer Science, Vol. 10 (1969), Chemistry and Physics of Polycarbonates, Polymer Reviews, H. Schnell, Vol. 9, John Wiley and Sons, Inc. (1964) sowie der DE-C 10 31 512 beschrieben.

Beim Schmelzumesterungsverfahren werden die bereits beim Phasengrenzflächenverfahren beschriebenen aromatischen Dihydroxyverbindungen, mit Kohlensäurediestern unter Zuhilfenahme von geeigneten Katalysatoren und gegebenenfalls weiteren Zusatzstoffen in der Schmelze umgeestert

Kohlensäurediester im Sinne der Erfindung sind solche der Formel (1) und (2) 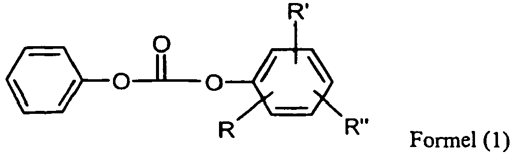 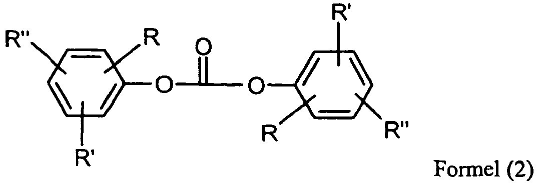 wobei
- R, R' und R": unabhängig voneinander H, gegebenenfalls verzweigte C₁-C₃₄-Alkyl/Cycloalkyl, C₇-C₃₄-Alkaryl oder C₆-C₃₄-Aryl darstellen können,
beispielsweise

Diphenylcarbonat, Butylphenyl-phenylcarbonat, Di-Butylphenylcarbonat, Isobutylphenyl-phenylcarbonat, Di-Isobutylphenylcarbonat, tert-Butylphenyl-phenylcarbonat, Di-tert-Butylphenylcarbonat, n-Pentylphenyl-phenylcarbonat, Di-(n-Pentylphenyl)carbonat, n-Hexylphenyl-phenylcarbonat, Di-(n-Hexylphenyl)carbonat, Cyclohexylphenyl-phenylcarbonat, Di-Cyclohexylphenylcarbonat, Phenylphenol-phenylcarbonat, Di-Phenylphenolcarbonat, Isooctylphenyl-phenylcarbonat, Di-Isooctylphenylcarbonat, n-Nonylphenyl-phenylcarbonat, Di-(n-Nonylphenyl)carbonat, Cumylphenyl-phenylcarbonat, Di-Cumylphenylcarbonat, Naphthylphenyl-phenylcarbonat, Di-Naphthylphenylcarbonat, Di-tert-Butylphenyl-phenylcarbonat, Di-(Di-tert-Butylphenyl)carbonat, Dicumylphenyl-phenylcarbonat, Di-(Dicumylphenyl)carbonat, 4-Phenoxyphenyl-phenylcarbonat, Di-(4-Phenoxyphenyl)carbonat, 3-Pentadecylphenyl-phenylcarbonat, Di-(3-Pentadecylphenyl)carbonat, Tritylphenyl-phenylcarbonat, Di-Tritylphenylcarbonat,
bevorzugt
Diphenylcarbonat, tert-Butylphenyl-phenylcarbonat, Di-tert-Butylphenylcarbonat, Phenylphenol-phenylcarbonat, Di-Phenylphenolcarbonat, Cumylphenyl-phenylcarbonat, Di-Cumylphenylcarbonat, besonders bevorzugt Diphenylcarbonat.

Es können auch Mischungen der genannten Kohlensäurediester eingesetzt werden.

Der Anteil an Kohlensäureester beträgt 100 bis 130 mol-%, bevorzugt 103 bis 120 mol-%, besonders bevorzugt 103 bis 109 mol-%, bezogen auf die Dihydroxyverbindung.

Als Katalysatoren im Sinne der Erfindung werden im Schmelzumesterungsverfahren wie in der genannten Literatur beschrieben basische Katalysatoren wie beispielsweise Alkali- und Erdalkalihydroxide und -oxide aber auch Ammonium- oder Phosphoniumsalze, im Folgenden als Oniumsalze bezeichnet, eingesetzt. Bevorzugt werden dabei Oniumsalze, besonders bevorzugt Phosphoniumsalze eingesetzt. Phosphoniumsalze im Sinne der Erfindung sind solche der Formel (3) 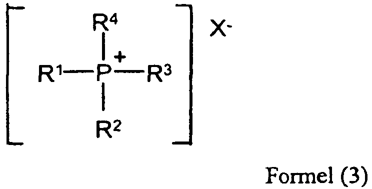 wobei
- R¹⁻⁴: dieselben oder verschiedene C₁-C₁₀-Alkyle, C₆-C₁₀-Aryle, C₇-C₁₀-Aralkyle oder C₅-C₆-Cycloalkyle sein können, bevorzugt Methyl oder C₆-C₁₄-Aryle, besonders bevorzugt Methyl oder Phenyl, und
- X⁻: ein Anion wie Hydroxid, Sulfat, Hydrogensulfat, Hydrogencarbonat, Carbonat, ein Halogenid, bevorzugt Chlorid, oder ein Alkoholat der Formel OR sein kann, wobei R C₆-C₁₄-Aryl oder C₇-C₁₂-Aralkyl, bevorzugt Phenyl, sein kann. Bevorzugte Katalysatoren sind
Tetraphenylphosphoniumchlorid,
Tetraphenylphosphoniumhydroxid,
Tetraphenylphosphoniumphenolat,
besonders bevorzugt Tetraphenylphosphoniumphenolat.

Die Katalysatoren werden bevorzugt in Mengen von 10⁻⁸ bis 10⁻³ mol, bezogen auf ein mol Bisphenol, besonders bevorzugt in Mengen von 10⁻⁷ bis 10⁻⁴ mol, eingesetzt.

Weitere Katalysatoren können allein oder gegebenenfalls zusätzlich zu dem Oniumsalz verwendet werden, um die Geschwindigkeit der Polymerisation zu erhöhen. Dazu gehören Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium. Am meisten bevorzugt sind Natriumhydroxid- und Natriumphenolat. Die Mengen des Cokatalysators können im Bereich von 1 bis 200 ppb, vorzugsweise 5 bis 150 ppb und am meisten bevorzugt 10 bis 125 ppb liegen, jeweils berechnet als Natrium.

Die Umesterungsreaktion der aromatischen Dihydroxyverbindung und des Kohlensäurediester in der Schmelze wird bevorzugt in zwei Stufen durchgeführt. In der ersten Stufe findet das Aufschmelzen der aromatischen Dihydroxyverbindung und des Kohlensäurediester bei Temperaturen von 80 bis 250°C, bevorzugt 100 bis 230°C, besonders bevorzugt 120 bis 190°C unter normalem Druck in 0 bis 5 Stunden, bevorzugt 0,25 bis 3 Stunden statt. Nach Zugabe des Katalysators wird durch Anlegen von Vakuum (bis zu 2 mm Hg) und Erhöhung der Temperatur (auf bis zu 260°C) durch Abdestillieren des Monophenols das Oligocarbonat aus der aromatischen Dihydroxyverbindung und dem Kohlensäurediester hergestellt. Hierbei fällt die Hauptmenge an Brüden aus dem Prozess an. Das so hergestellte Oligocarbonat hat eine mittlere Gewichtsmolmasse M_{w} (ermittelt durch Messung der rel. Lösungsviskosität in Dichlormethan oder in Mischungen gleicher Gewichtsmengen Phenol/o-Dichlorbenzol geeicht durch Lichtstreuung) im Bereich von 2000 g/mol bis 18 000 g/mol bevorzugt von 4 000 g/mol bis 15 000 g/mol.

In der zweiten Stufe wird bei der Polykondensation durch weiteres Erhöhen der Temperatur auf 250 bis 320°C, bevorzugt 270 bis 295°C und einem Druck von <2 mm Hg das Polycarbonat hergestellt. Hierbei wird der Rest an Brüden aus dem Prozess entfernt.

Die Katalysatoren können auch in Kombination (zwei oder mehrere) miteinander eingesetzt werden.

Beim Einsatz von Alkali-/Erdalkalimetallkatalysatoren kann es vorteilhaft sein, die Alkali-/ Erdalkalimetallkatalysatoren zu einem späteren Zeitpunkt (z. B. nach der Oligocarbonatsynthese bei der Polykondensation in der zweiten Stufe) zuzusetzen.

Die Reaktion der aromatischen Dihydroxyverbindung und des Kohlensäurediester zum Polycarbonat kann im Sinne des erfindungsgemäßen Verfahrens diskontinuierlich oder bevorzugt kontinuierlich durchgeführt werden, beispielsweise in Rührkesseln, Dünnschichtverdampfern, Fallfilmverdampfern, Rührkesselkaskaden, Extrudern, Knetern, einfachen Scheibenreaktoren und Hochviskosscheibenreaktoren.

Analog des Phasengrenzflächenverfahrens können durch Einsatz mehrfunktioneller Verbindungen verzweigte Poly- oder Copolycarbonate hergestellt werden.

Den erfindungsgemäßen Polycarbonaten können noch andere aromatische Polycarbonate und/oder andere Kunststoffe wie aromatische Polyester wie Polybutylenterephthalat oder Polyethylenterephthalat, Polyamide, Polyimide, Polyesteramide, Polyacrylate und Polymethacrylate wie zum Beispiel Polyalkyl(meth)acrylate und hier insbesondere Polymethylmethacrylat, Polyacetale, Polyurethane, Polyolefine, halogenhaltige Polymere, Polysulfone, Polyethersulfone, Polyetherketone, Polysiloxane, Polybenzimidazole, Harnstoff-Formaldehyd-Harze, Melamin-Formaldehydharze, Phenol-Formaldehyd-Harze, Alkydharze, Epoxidharze, Polystyrole, Copolymere des Styrols oder des alpha-Methylstyrols mit Dienen oder Acrylderivaten, Pfropfpolymerisate auf Basis Acrylnitril/-Butadien/Styrol oder auf Acrylatkautschuk basierende Pfropfcopolymerisate (s. beispielsweise die in EP-A 640 655 beschriebenen Pfropfpolymerisate) beziehungsweise Siliconkautschuke in bekannter Weise zugemischt werden, beispielsweise durch Compoundierung.

Den erfindungsgemäßen Polycarbonaten sowie den ggf. weiteren enthaltenen Kunststoffen können noch die für diese Thermoplasten üblichen Additive wie Füllstoffe, UV-Stabilisatoren, Thermostabilisatoren, Antistatika und Pigmente in den üblichen Mengen zugesetzt werden; gegebenenfalls können das Entformungsverhalten, das Fließverhalten, und/oder die Flammwidrigkeit noch durch Zusatz externer Entformungsmittel, Fließmittel, und/oder Flammschutzmittel verbessert werden (z. B. Alkyl- und Arylphosphite, -phosphate, -phosphane, -niedermolekulare Carbonsäureester, Halogenverbindungen, Salze, Kreide, Quarzmehl, Glas- und Kohlenstofffasern, Pigmente und deren Kombination). Solche Verbindungen werden z. B. in WO 99/55772, S. 15 - 25, EP 1 308 084 und in den entsprechenden Kapiteln des "Plastics Additives Handbook" , ed. Hans Zweifel, 5th Edition 2000, Hanser Publishers, Munich beschrieben.

Polyole im Rahmen der vorliegenden Offenbarung sind solche mit zahlengemittelten Molekularge-wichten von 250 bis 20000, bevorzugt von 500 bis 8000, besonders bevorzugt 500 bis 6000, ganz besonders bevorzugt von 1100 bis 6000 und einer Funktionalität von 1,5 bis 8. Zum Beispiel sind dies Polyetherpolyole, die zwei bis vier vorzugsweise zwei Hydroxylgruppen enthalten. Als Handelsprodukte sind z.B. die Polytetrahydrofuran-Homopolymerisate Tetrathane® 250 oder Tetrathane® 2900 der Firma Du Pont geeignet. Geeignete Polyetherpolyole sind auch Blockcopolymerisate und Copolymerisate mit unregelmäßiger Folge der Kettenbausteinen sowie Mischungen der Polyetherpolyole.

Polyetherpolyole können nach bekannten Verfahren, hergestellt werden, beispielsweise durch anionische Polymerisation von Alkylenoxiden in Gegenwart von Alkalihydroxiden oder Alkalialkoholaten als Katalysatoren und unter Zusatz mindestens eines Startermoleküls, das reaktive Wasserstoffatome enthält oder durch kationische Polymerisation von Alkylenoxiden in Gegenwart von Lewis-Säuren wie Antimonpentachlorid oder Borfluorid-Etherat oder durch Doppelmetallcyanid (DMC)-Katalyse. Geeignete Alkylenoxide enthalten 2 bis 4 Kohlenstoffatome im Alkylenrest. Beispiele sind Tetrahydrofuran, 1,2-Propylenoxid, 1,2- bzw. 2,3-Butylenoxid. Die Alkylenoxide können einzeln, alternierend nacheinander oder als Mischungen verwendet werden. Als Startermolekül kommen Wasser oder 2- und 3-wertige Alkohole in Betracht, wie Ethylenglykol, 1,2-Propandiol und 1,3-Propandiol, Diethylenglykol, Dipropylenglykol, Ethandiol-1,4, Glycerin, Trimethylolpropan usw.

Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril gewonnen werden können.

Als weitere Polyole können die mindestens zwei, vorzugsweise 2 bis 4 Hydroxylgruppen und in der Regel ein zahlengemitteltes Molekulargewicht von 400-8000 aufweisenden Polyester, Polythioether, Polyacetale, Polycarbonate und Polyesteramide verwendet werden. Bei den bifunktionellen Polyether-Derivaten kann es sich um ein Homopolymerisat, um ein Blockcopolymerisat oder um ein Copolymerisat mit unregelmäßiger Folge der Kettenbausteine handeln. Mischungen der Polyester und Polyether können selbstverständlich eingesetzt werden.

Die genannten Polyole können im Rahmen der vorliegenden Offenbarung sowohl alleine als auch als Mischungen verschiedener Polyole eingesetzt werden. Der Anteil an Polyol bzw. an Polyolen in den Zusammensetzungen beträgt 0,01 Gew-% bis < 0,3 Gew-%, bevorzugt 0,01 Gew-% bis 0,25 Gew-%, ganz besonders bevorzugt 0,01 Gew-% bis 0,12 Gew-%, insbesondere 0,03 bis 0,11 Gew-% jeweils bezogen auf die Gesamtzusammensetzung.

Für die Erhöhung der Flammwidrigkeit von Zusammensetzungen, die zu transparenten Erzeugnissen verarbeitet werden sollen, ist der Einsatz von Polyolen mit vier Kohlenstoffatomen im Alkylenteil bevorzugt. Ein Beispiel für ein solches bevorzugtes Polyol ist Polytetrahydrofuran.

Als Flammschutzmittel werden Alkali- bzw. Erdalkalisalze von aliphatischen bzw. aromatischen Sulfonsäure- Sulfonamid- und Sulfonimidderivaten eingesetzt.

Geeignete Salze sind beispielsweise: Natrium- oder Kaliumperfluorbutansulfat, Natrium- oder Kaliumperfluormethansulfonat, Natrium- oder Kaliumperfluoroctansulfat, Natrium-oder Kalium-2,5-dichlorbenzolsulfat, Natrium- oder Kalium-2,4,5-trichlorbenzolsulfat, Natrium- oder Kaliummethylphosphonat, Natrium- oder Kalium-(2-phenyl-ethylen)-phosphonat, Natrium- oder Kaliumpentachlorbenzoat, Natrium- oder Kalium-2,4,6-trichlorbenzoat, Natrium-oder Kalium-2,4-dichlorbenzoat, Lithium-phenylphosphonat, Natrium- oder Kalium-diphenylsulfon-sulfonat, Natrium- oder Kalium-2-formylbenzolsulfonat, Natrium- oder Kalium-(N-benzolsulfonyl)-benzolsulfonamid. Trinatrium- oder Trikalium-hexafluoroaluminat, Dinatrium- oder Dikaliumhexafluorotitanat, Dinatrium- oder Dikalium-hexafluorosilikat, Dinatrium- oder Dikaliumhexafluorozirkonat, Natrium- oder Kalium-pyrophosphat, Natrium- oder Kalium-metaphosphat, Natrium- oder Kalium-tetrafluoroborat, Natrium- oder Kalium-hexafluorophosphat, Natrium- oder Kalium- oder Lithiumphosphat, N-(p-tolylsulfonyl-)-p-toluolsulfimid-Kaliumsalz, N-(N'-Benzyl-aminocarbonyl)-sulfanylimid-Kaliumsalz.

Bevorzugt werden Natrium- oder Kaliumperfluorbutansulfat, Natrium- oder Kaliumperfluoroctansulfat, Natrium- oder Kalium-diphenylsulfon-sulfonat und Natrium oder Kalium-2,4,6-trichlorben-zoat und N-(p-tolylsulfonyl-)-p-toluolsulfimid-Kaliumsalz, N-(N'-Benzylaminocabonyl)-sulfanylimid-Kaliumsalz. Ganz besonders bevorzugt sind Kalium-nona-fluor-1-butansulfonat und Natrium- oder Kalium-diphenyl-sulfonsäure-sulfonat. Kalium-nona-fluor-1-butansulfonat ist u.a. als Bayowet^{®}C4 (Firma Lanxess, Leverkusen, Deutschland, CAS-Nr. 29420-49-3), RM64 (Firma Miteni, Italien) oder als 3M™ Perfluorobutanesulfonyl Fluoride FC-51 (Firma 3M, USA) kommerziell erhältlich. Ebenfalls sind Mischungen der genannten Salze geeignet.

Besonders bevorzugt sind Kaliumperfluorbutansulfonat, Kaliumdiphenyl-sulfonsulfonat, N-(p-tolylsulfonyl-)-p-toluolsulfimid-Kaliumsalz, N-(N'-Benzylaminocabonyl)-sulfanylimid-Kaliumsalz, ganz besonders bevorzugt ist Kalium-nona-fluor-1-butansulfonat.

Diese organischen Flammschutzsalze werden in Mengen von 0,01 Gew-% bis 0,8 Gew%, bevorzugt 0,02 Gew% bis 0,6 Gew-%, besonders bevorzugt 0,03 Gew-% bis 0,2 Gew-%, ganz besonders bevorzugt 0,03 bis 0,15 Gew-%, insbesondere 0,03 bis 0,065 Gew.-% jeweils bezogen auf die Gesamtzusammensetzung in den Formmassen eingesetzt.

Als weitere Flammschutzmittel kommen z.B. phosphorhaltige Flammschutzmittel ausgewählt aus den Gruppen der Mono- und oligomeren Phosphor- und Phosphonsäureester, Phosphonatamine, Phosphonate, Phosphinate, Phosphite, Hypophosphite, Phosphinoxide und Phosphazene, wobei auch Mischungen von mehreren Komponenten ausgewählt aus einer oder verschiedenen dieser Gruppen als Flammschutzmittel zum Einsatz kommen können in Frage. Auch andere hier nicht speziell erwähnte vorzugsweise halogenfreie Phosphorverbindungen können alleine oder in beliebiger Kombination mit anderen vorzugsweise halogenfreien Phosphorverbindungen eingesetzt werden. Hierzu zählen auch rein anorganische Phosphorverbindungen wie Borphosphathydrat. Des weiteren kommen als phosphorhaltige Flammschutzmittel Phosphonatamine in Betracht. Die Herstellung von Phosphonataminen ist beispielsweise in US-Patentschrift 5,844,028 beschrieben. Phosphazene und deren Herstellung sind beispielsweise in EP-A 728 811, DE-A 1 961668 und WO 97/40092 beschrieben. Auch können Siloxane, phosphorylierte Organosiloxane, Silicone oder Siloxysilane als Flammschutzmittel Verwendung finden, was beispielsweise in der EP 1 342 753, in der DE 10257079A sowie in der EP 1 188 792 näher beschrieben wird.

Phosphorhaltige Flammschutzadditive im erfindungsgemäßen Sinne sind bevorzugt ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzadditiv zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (4) 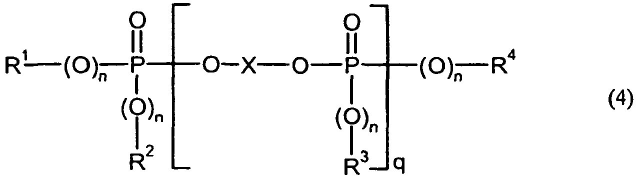 worin
- R¹, R², R³ und R⁴,: unabhängig voneinander jeweils gegebenenfalls halogeniertes C₁ bis C₈-Alkyl, jeweils gegebenenfalls durch Alkyl, vorzugsweise C₁ bis C₄-Alkyl, und/oder Halogen, vorzugsweise Chlor, Brom, substituiertes C₅ bis C₆-Cycloalkyl, C₆ bis C₂₀-Aryl oder C₇ bis C₁₂₋Aralkyl,
- n: unabhängig voneinander, 0 oder 1,
- q: 0 bis 30 und
- X: einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R¹, R², R³ und R⁴ unabhängig voneinander für C₁ bis C₄-Alkyl, Phenyl, Naphthyl oder Phenyl-C₁-C₄-alkyl. Die aromatischen Gruppen R¹, R², R³ und R⁴ können ihrerseits mit Halogen- und/oder Alkylgruppen, vorzugsweise Chlor, Brom und/oder C₁ bis C₄-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
- X: in der Formel (4) bedeutet bevorzugt einen ein- oder mehrkernigen aromatischen Rest mit 6 bis 30 C-Atomen. Dieser leitet sich bevorzugt von Bisphenolen der Formel (1) ab.
- n: in der Formel (4) kann, unabhängig voneinander, 0 oder 1 sein, vorzugsweise ist n gleich 1.
- q: steht für Werte von 0 bis 30, bevorzugt 0,3 bis 20, besonders bevorzugt 0,5 bis 10, insbesondere 0,5 bis 6, ganz besonders bevorzugt 1,1 bis 1,6.
- X: steht besonders bevorzugt für 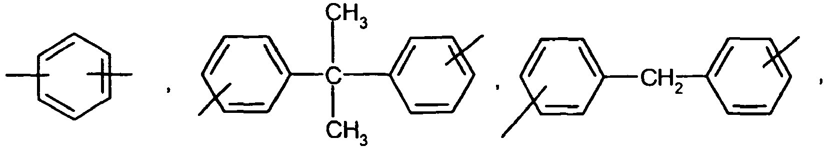 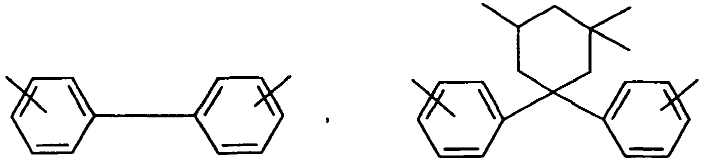 oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Als phosphorhaltige Flammschutzmittel können auch Mischungen verschiedener Phosphate gemäß Formel (4) eingesetzt werden.

Phosphorverbindungen der Formel (4) sind insbesondere Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, Resorcin verbrücktes Oligophosphat und Bisphenol A verbrücktes Oligophosphat. Der Einsatz von oligomeren Phosphorsäureestern der Formel (4), die sich vom Bisphenol A ableiten, ist insbesondere bevorzugt.

Höchst bevorzugt es phosphorhaltiges Flammschutzadditiv ist Bisphenol-A basierendes Oligophosphat gemäß Formel (IVa).

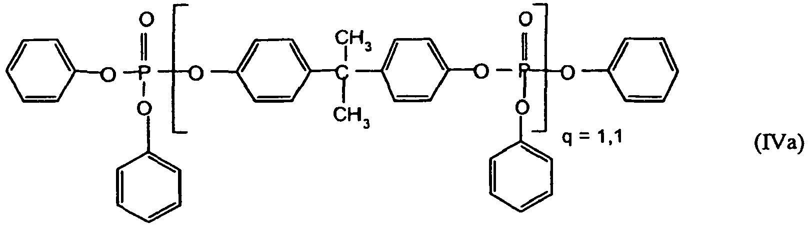

Die Phosphorverbindungen sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Wenn Mischungen verschiedener Phosphorverbindungen eingesetzt werden und im Fall von oligomeren Phosphorverbindungen, handelt es sich bei dem angegebenen q-Wert um den mittleren q-Wert. Der mittlere q-Wert kann bestimmt werden, indem mittels geeigneter Methode (Gaschromatographie (GC), High Pressure Liquid Chromatography (HPLC), Gelpermeationschromatographie (GPC)) die Zusammensetzung der Phosphorverbindung (Molekulargewichtsverteilung) bestimmt wird und daraus die Mittelwerte für q berechnet werden.

Weiterhin können Phosphonatamine und Phosphazene, wie sie in WO 00/00541 und WO 01/18105 beschrieben sind, als Flammschutzadditive eingesetzt werden.

Die Flammschutzadditive können allein oder in beliebiger Mischung untereinander oder in Mischung mit anderen Flammschutzadditiven eingesetzt werden.

Phosphorhaltige Flammschutzaditive sind kommerziell erhältlich, z. B. Reofos^{®} BAPP (Firma Chemtura, Indianapolis, USA), NcendX^{®} P-30 (Firma Albemarle, Baton Rouge, Louisiana, USA), Fyrolflex^{®} BDP (Firma Akzo Nobel, Arnheim, Niederlande), CR 741^{®} (Firma Daihachi, Osaka, Japan),. Reofos^{®} TPP (Firma Chemtura), Fyrolflex^{®} TPP (Firma Akzo Nobel), Disflamoll^{®} TP (Firma Lanxess), Reofos RDP (Firma Chemtura) oder Fyrolflex^{®} RDP (Firma Akzo Nobel).

Phosphorhaltige Flammschutzmittel werden nach Bedarf bevorzugt in Mengen von bis zu 30 Gew.-%, besonders bevorzugt, 2 bis 25 Gew.-%, ganz besonders bevorzugt 3 bis 15 Gew.-% (bezogen auf die Gesamtzusammensetzung) zugesetzt.

Weiterhin können den Zusammensetzungen Antitropfmittel zugesetzt werden. Als Antitropfmittel ist beispielsweise Polytetrafluorethylen (PTFE) genannt. PTFE ist in diversen Produktqualitäten kommerziell verfügbar. Hierzu zählen Additive wie Hostaflon^{®} TF2021 oder aber PTFE-Blends wie Metablen^{®} A-3800 (ca. 40% PTFE CAS 9002-84-0 und ca. 60 % Methylmethacrylat/Butylacrylat Copolymer CAS 25852-37-3 von Misubishi-Rayon) oder Blendex^{®} B449 (ca. 50% PTFE und ca. 50 % SAN [aus 80 % Styrol und 20 % Acrylnitril] der Firma Chemtura.

Im Rahmen der vorliegenden Erfindung wird PTFE in Mengen von 0,05 Gew% bis 5 Gew%, bevorzugt 0,1 Gew% bis 1,0 Gew%, besonders bevorzugt 0,1 Gew% bis 0,5 Gew% jeweils bezogen auf die Gesamtzusammensetzung eingesetzt.

Weitere geeignete Flammschutzmittel im Sinne der vorliegenden Erfindung sind halogenhaltige Verbindungen. Hierzu zählen bromierte Verbindungen wie bromierte Oligocarbonate (z.B. Tetrabrombisphenol-A oligocarbonat BC-52^{®}, BC-58^{®}, BC-52HP^{®} der Firma Chemtura), Polypentabrombenzylacrylate (z.B. FR 1025 der Firma Dead Sea Bromine (DSB)), oligomere Umsetzungsprodukte aus Tetrabrom-bisphenol-A mit Expoxiden (z.B. FR 2300 und 2400 der Firma DSB), oder bromierte Oligo- bzw. Polystyrole (z.B. Pyro-Chek^{®} 68PB der Firma Ferro Corporation, PDBS 80 und Firemaster^{®}PBS-64HW der Firma Chemtura).

Besonders bevorzugt im Rahmen dieser Erfindung sind bromierte Oligocarbonate auf Basis Bisphenol A, insbesondere Tetrabrombisphenol-A oligocarbonat.

Im Rahmen der vorliegenden Erfindung werden bromhaltige Verbindungen in Mengen von 0,1 Gew% bis 30 Gew%, bevorzugt 0,1 Gew% bis 20 Gew%, besonders bevorzugt 0,1 Gew% bis 10 Gew% und ganz besonders bevorzugt 0,1 Gew% bis 5,0 Gew% jeweils bezogen auf die Gesamtzusammensetzung eingesetzt.

Des weiteren können chlorhaltige Flammschutzmittel wie zum Beispiel Tetrachlorphthalimide eingesetzt werden.

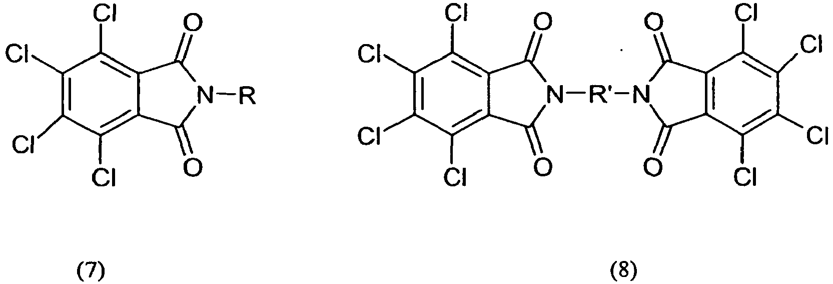

Als geeignete Tetrachlorphthalimide im Sinne der Erfindung gemäss Formel (7) seien beispielsweise genannt: N-Methyl-tetrachlorphthalimid, N-ethyl- tetrachlorphthalimid, N-Propyl- tetrachlorphthalimid, N-lsopropyl- tetrachlorphthalimid, N-Butyl- tetrachlorphthalimid, N-Isobutyltetrachlorphthalimid, N-Phenyl- tetrachlorphthalimid, N- (4-Chlorphenyl) tetrachlorphthalimid, N-(3, 5-Dichlorphenyl)-tetrachlorphthalimid N-(2,4,6-Trichlorphenyl)- tetrachlorphthalimid, N-Naphthyl- tetrachlorphthalimid. Als geeignete Tetrachlorphthalimideim Sinne der Erfindung gemäss Formel (7) seienbeispielsweise genannt: N,N'-Ethylen-di-tetrachlorphthalimid.

N.N'- Propylen-di- tetrachlorphthalimid N,N'-Butylen-di-tetrachlorphthalimid N,N'-p-Phenylen-di-tetrachlorphthalimid, 4,4'-Di-tetrachlorphthalimido-diphenyl,N-(Tetrachlorphthalimido)-tetrachlorphthalimid.

Insbesondere geeignet im Sinne der Erfindung sind N-Methyl- sowie N-Phenyltetrachlorphthalimid, N,N'-Ethylen-di-tetrachlorphthalimid und N-(Tetrachlorphthalimido)-tetrachlorphthalimid.
Mischungen verschiedener Tetrachlorphthalimide der Formeln (7) oder (8) sind gleichfalls zu verwenden.

Im Rahmen der vorliegenden Erfindung werden die genannten chlorhaltigen Verbindungen in Mengen von 0,1 Gew% bis 30 Gew%, bevorzugt 0,1 Gew% bis 20 Gew%, besonders bevorzugt 0,1 Gew% bis 10 Gew% und ganz besonders bevorzugt 0,1 Gew% bis 5,0 Gew% jeweils bezogen auf die Gesamtzusammensetzung eingesetzt.

Die brom- beziehungsweise chlorhaltigen Flammschutzmittel können auch in Kombination mit Antimontrioxid eingesetzt werden.

Hierbei ist die vorliegende Erfindung nicht auf die genannten Flammschutzmittel beschränkt, vielmehr können auch weitere flammhemmende Additive, wie z.B. in J. Troitzsch, "International Plastics Flammability Handbook", Hanser Verlag, München 1990 beschrieben, eingesetzt werden.

Bei der Auswahl weiterer Flammschutzmittel ist darauf zu achten, dass die Transparenz nicht negativ beeinträchtigt wird.

Den erfindungsgemäßen Polycarbonaten und Copolycarbonaten können weiterhin die für diese Thermoplasten üblichen Additive wie Füllstoffe, UV-Stabilisatoren, Thermostabilisatoren, Entformungsmittel, Fließmittel, Antistatika und Pigmente in den üblichen Mengen zugesetzt werden. Thermostabilisatoren wie beispielsweise und bevorzugt Tris-(2,4-di-tert, -butylphenyl)phosphat oder Triphenylphosphin werden bevorzugt in einer Menge von 10 bis 3000 ppm, bezogen auf die Gesamtzusammensetzung, zugesetzt.

### Herstellung der Zusammensetzungen:

Die Herstellung einer Zusammensetzung enthaltend Polycarbonat , mindestens ein Polyol und mindestens ein Flammschutzadditiv erfolgt mit gängigen Einarbeitungsverfahren und kann beispielsweise durch Vermischen von Lösungen des Flammschutzadditives und des Polyols mit einer Lösung von Polycarbonat in geeigneten Lösungsmitteln wie Dichlormethan, Halogenalkanen, Halogenaromaten, Chlorbenzol und Xylolen realisiert werden. Die Substanzgemische werden dann bevorzugt in bekannter Weise durch Extrusion homogenisiert. Die Lösungsgemische werden bevorzugt in bekannter Weise durch Ausdampfen des Lösungsmittels und anschließender Extrusion aufgearbeitet, beispielsweise compoundiert.

Zudem kann die Zusammensetzung in üblichen Mischvorrichtungen wie Schneckenextrudern (zum Beispiel Zweischneckenextruder, ZSK), Kneter, Brabender- oder Banbury-Mühlen gemischt und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die erfindungsgemäßen Zusammensetzungen können in bekannter Weise aufgearbeitet und zu beliebigen Formkörpern verarbeitet werden, beispielsweise durch Extrusion, Spritzguss oder Extrusionsblasformen.

Coextrudierte Polycarbonatmassivplatten können z. B. mit Hilfe folgender Maschinen und Apparate hergestellt werden:
- den Hauptextruder mit einer Schnecke der Länge 33 D und einem Durchmesser von 70 mm mit Entgasung
- einen Coextruder zum Aufbringen der Deckschicht mit einer Schnecke der Länge 25 D und einem Durchmesser von 35 mm
- eine speziellen Coextrusions-Breitschlitzdüse mit 450 mm Breite
- einen Glättkalander
- eine Rollenbahn
- eine Abzugseinrichtung
- eine Ablängvorrichtung (Säge)
- einen Ablagetisch.

Coextrudierte Polycarbonatstegplatten können z. B. mit Hilfe folgender Maschinen und Apparate hergestellt werden:
- dem Hauptextruder mit einer Schnecke der Länge 33 D und einem Durchmesser von 70 mm mit Entgasung
- dem Coexadapter
- einem Coextruder zum Aufbringen der Deckschicht mit einer Schnecke der Länge 25 D und einem Durchmesser von 30 mm
- der speziellen Breitschlitzdüse mit 350 mm Breite
- dem Kalibrator
- der Rollenbahn
- der Abzugseinrichtung
- der Ablängvorrichtung (Säge)
- dem Ablagetisch.

Bei beiden Plattentypen wird das Polycarbonat-Granulat des Basismaterials dem Fülltrichter des Hauptextruders zugeführt, das Coextrusionsmaterial dem des Coextruders. Im jeweiligen Plastifiziersystem Zylinder/Schnecke erfolgt das Aufschmelzen und Fördern des jeweiligen Materials. Beide Materialschmelzen werden im Coexadapter zusammengeführt und bilden nach Verlassen der Düse und Abkühlen einen Verbund. Die weiteren Einrichtungen dienen dem Transport, Ablängen und Ablegen der extrudierten Platten.

Platten ohne Coextrusionsschicht werden entsprechend hergestellt, indem entweder der Coextruder nicht betrieben wird oder mit der gleichen Polymerzusammensetzung wie der Hauptextruder befüllt wird.

Das Blasformen von Polycarbonat ist unter anderem in der DE-A 102 29 594 und hier zitierter Literatur näher beschrieben.

### Beispiele

### Flammschutzprüfung

Das Brandverhalten wurde nach der Methode UL94V Underwriters Laboratories Inc. Standard of Safety, "Test for Flammability of Plastic Materials for Parts in Devices and Appliances", S 14 ff, Northbrook 1998; b) J. Troitzsch, "International Plastics Flammability Handbook", S. 346 ff., Hanser Verlag, München 1990) bestimmt. Für die Einstufung eines flammgeschützten Kunststoffs in die Brandklasse UL94V-0 müssen im einzelnen die folgenden Kriterien erfüllt sein: bei einem Satz von 5 ASTM Normprüfkörpern (Maße: 127 x 12,7 x X, mit X = Dicke des Prüfkörpers, z.B. 3,2; 3,0; 1,5 1,0 oder 0,75 mm) dürfen alle Proben nach zweimaliger Beflammung von 10 Sekunden Dauer mit einer offenen Flamme definierter Höhe nicht länger als 10 Sekunden nachbrennen. Die Summe der Nachbrennzeiten bei 10 Beflammungen von 5 Proben darf nicht größer als 50 Sekunden sein. Zudem darf kein brennendes Abtropfen, vollständiges Abbrennen oder Nachglühen des jeweiligen Prüfkörpers von länger als 30 Sekunden erfolgen. Die Einstufung UL94V-1 verlangt, dass die Einzelnachbrennzeiten nicht länger als 30 Sekunden betragen und dass die Summe der Nachbrennzeiten von 10 Beflammungen von 5 Proben nicht größer als 250 Sekunden ist. Die Gesamtnachglühzeit darf nicht mehr als 250 Sekunden betragen. Die übrigen Kriterien sind identisch mit den oben erwähnten. Eine Einstufung in die Brandklasse UL94V-2 erfolgt dann, wenn es bei Erfüllen der übrigen Kriterien der UL94V-1 Einstufung zu einem brennenden Abtropfen kommt.

Die Flammschutzprüfung wurde an Teststäben der Abmessungen 127x12,7xX mm, wobei X die Dicke des Prüfkörpers ist, die in der Tabelle angegeben ist.

Die Trübung (Haze) und Transmission wurden bestimmt nach DIN 5036 an Platten der Geometrie 60 x 40 x 4 mm

### Herstellung der Beispiele:

Die Einrichtung zur Compoundierung besteht aus:
Dosiereinrichtung für die Komponenten
   - Einem gleichlaufenden Zweiwellenkneter (ZSK 53 von der Firma Werner & Pfleiderer) mit einem Schneckendurchmesser von 53 mm
   - Einer Lochdüse zur Ausformung von Schmelzesträngen
   - Einem Wasserbad zur Abkühlung und dem Verfestigen der Stränge
   - Einem Granulator.

KFBS und die entsprechenden Polyole werden in Pulverform mit dem Polycarbonat-Pulver vermischt und in das Polycarbonat eincompoundiert. Mit Hilfe der oben beschriebenen Compoundiereinrichtung werden die in Tabelle langegebenen Zusammensetzungen hergestellt.

**Tabelle 2 (Mengenangaben in Gew.-%)**

| **Beispiel** | **1V** | **2** | **3** | **4V** | **5** | **6V** | **7V** | **8V** |
|---|---|---|---|---|---|---|---|---|
| Polycarbonat Granulat | Auf 100 Gew% | Auf 100 Gew% | Auf 100 Gew% | Auf 100 Gew% | Auf 100 Gew% | Auf 100 Gew% | Auf 100 Gew% | Auf 100 Gew% |
| Polycarbonat Pulver | 6,935 Gew% | 6,885 Gew% | 6,835 Gew% | 6,9 | 6,8 | 6,4 | 6,8 | 6,4 |
| KFBS | 0,065 | 0,065 | 0,065 | 0,1 | 0,1 | 0,1 | 0,1 | 0,1 |
| PTHF | -- | 0,05 | 0,1 | -- | 0,1 | 0,5 | -- | -- |
| PEG | -- | -- | -- | -- | -- | -- | 0,1 | 0,5 |
| UL 94 bei 2,6mm | V2 | V0 | V0 | -- | -- | -- | -- | -- |
| UL 94 bei 2,8 mm | V2 | V0 | V0 | -- | -- | -- | -- | -- |
| UL 94 bei 3,0 mm | V1 | V0 | V0 | V0 | V0 | V0 | V0 | V0 |
| UL 94 bei 3,2mm | V1 | V0 | V0 | V0 | V0 | V0 | V0 | V0 |
| Trübung | 0,4 | 0,2 | 0,2 | 1,4 | 0,7 | 2,6 | 1,3 | 2,6 |
| Transmission | 88,96 | 89,15 | 89,18 | 87,6 | 88,58 | 87,66 | 86,3 | 83,12 |

| | | | | | | | | |
|---|---|---|---|---|---|---|---|---|
| Polycarbonat (Granulat): Polycarbonat (Basis Bisphenol A)mit einem mittleren Molekulargewicht M_{w} von 28000 (Makrolon® 2808 der BayerMaterialScience AG). Polycarbonat (Pulver): Polycarbonat (Basis Bisphenol A) Pulver mit einem mittleren Molekulargewicht M_{w} von 31000 (Makrolon® 3108 der BayerMaterialScience AG). PTHF: Polytetrahydrofuran mit einem mittleren Molekulargewicht von 2900 (Tetrathane® 2900 der Firma Du Pont). PEG: Polyethylenglycol mit einem mittleren Molekulargewicht von 8000. PPG: Polypropylenglycol mit einem mittleren Molekulargewicht von 500. KFBS: Kalium-nona-fluor-1-butansulfonat V in Tabelle 1 steht für Vergleich | | | | | | | | |

## Patentansprüche

1. Polycarbonat - Zusammensetzung enthaltend 0,01 Gew% bis < 0,3, Gew.-% Polyol und wobei als Polyol Blytetrahydrofuran eingesetzt wird, und 0,01 Gew% bis 0,8 Gew.-% eines Alkali- oder Erdalkalisalz einer aliphatischen oder aromatischen Sulfonsäure, jeweils bezogen auf die Gesamtzusammensetzung.

2. Zusammensetzung gemäß Anspruch 1, enthaltend 0,01 bis 0,25 Gew.-% Polytetrahydrofuran.

3. Zusammensetzung gemäß Anspruch 1 enthaltend 0,01 bis 0,12 Gew.-% Polytetrahydrofuran.

4. Zusammensetzung gemäß Anspruch 1 enthaltend 0,03 bis 0,11 Gew-% Polytetrahydrofuran und 0,03 bis 0,15 Gew.-% Alkali- oder Erdalkalisalz einer aliphatischen oder aromatischen Sulfonsäure.

5. Zusammensetzung gemäß Anspruch 1 enthaltend 0,03 bis 0,11 Gew-% Polytetrahydrofuran und 0,03 bis 0,065 Gew. -% Alkali- oder Erdalkalisalz einer aliphatischen oder aromatischen Sulfonsäure.

6. Zusammensetzung nach Anspruch 1, enthaltend ein Polytetrahydrofuran mit einem Molekulargewicht von 250 bis 20000.

7. Zusammensetzung gemäß Anspruch 1, enthaltend Natrium- oder Kalium-nona-fluor-1-butansulfonat, Natrium- oder Kalium-Diphenyl-Sulfonsäuresulfonat oder eine Mischung hieraus ist.

8. Zusammensetzung gemäß Anspruch 1, **dadurch gekennzeichnet, dass** zusätzlich ein Antitropfmittel enthalten ist.

9. Zusammensetzung gemäß Anspruch 8, wobei das Antitropfmittel ein Polytetrafluorethylen oder ein Polytetrafluorethylen-Blend ist.

10. Erzeugnis enthaltend eine Zusammensetzung gemäß Anspruch 1.

11. Erzeugnis gemäß Anspruch 10, **dadurch gekennzeichnet, dass** das Erzeugnis im Spritzgussverfahren hergestellt wird.

## Claims

1. Polycarbonate composition comprising from 0.01% by weight to < 0.3% by weight of polyol and where polytetrahydrofuran is used as polyol, and comprising from 0.01% by weight to 0.8% by weight of an aliphatic or aromatic alkali metal sulphonate or aliphatic or aromatic alkaline earth metal sulphonate, based in each case on the total composition.

2. Composition according to Claim 1, comprising from 0.01 to 0.25% by weight of polytetrahydrofuran.

3. Composition according to Claim 1, comprising from 0.01 to 0.12% by weight of polytetrahydrofuran.

4. Composition according to Claim 1, comprising from 0.03 to 0.11% by weight of polytetrahydrofuran and from 0.03 to 0.15% by weight of an aliphatic or aromatic alkali metal sulphonate or of an aliphatic or aromatic alkaline earth metal sulphonate.

5. Composition according to Claim 1, comprising from 0.03 to 0.11% by weight of polytetrahydrofuran and from 0.03 to 0.065% by weight of an aliphatic or aromatic alkali metal sulphonate or of an aliphatic or aromatic alkaline earth metal sulphonate.

6. Composition according to Claim 1, comprising a polytetrahydrofuran with a molecular weight of from 250 to 20 000.

7. Composition according to Claim 1, comprising sodium nonafluorobutane-1-sulphonate or potassium nonafluorobutane-1-sulphonate, sodium diphenylsulphonic acid sulphonate or potassium diphenylsulphonic acid sulphonate or a mixture thereof.

8. Composition according to Claim 1, **characterized in that** an antidrip agent is also present.

9. Composition according to Claim 8, where the antidrip agent is a polytetrafluoroethylene or a polytetrafluoroethylene blend.

10. Product comprising a composition according to Claim 1.

11. Product according to Claim 10, **characterized in that** the product is produced by the injection-moulding process.

## Revendications

1. Composition de polycarbonate contenant de 0,01 % en poids à < 0,3 % en poids de polyol et du polytétrahydrofurane étant utilisé en tant que polyol, et de 0,01 % en poids à 0,8 % en poids d'un sel de métal alcalin ou alcalino-terreux d'un acide sulfonique aliphatique ou aromatique, chaque fois par rapport à la composition totale.

2. Composition selon la revendication 1, contenant de 0,01 à 0,25 % en poids de polytétrahydrofurane.

3. Composition selon la revendication 1, contenant de 0,01 à 0,12 % en poids de polytétrahydrofurane.

4. Composition selon la revendication 1, contenant de 0,03 à 0,11 % en poids de polytétrahydrofurane et de 0,03 à 0,15 % en poids de sel de métal alcalin ou alcalino-terreux d'un acide sulfonique aliphatique ou aromatique.

5. Composition selon la revendication 1, contenant de 0,03 à 0,11 % en poids de polytétrahydrofurane et de 0,03 à 0,065 % en poids de sel de métal alcalin ou alcalino-terreux d'un acide sulfonique aliphatique ou aromatique.

6. Composition selon la revendication 1, contenant un polytétrahydrofurane ayant une masse moléculaire de 250 à 20 000.

7. Composition selon la revendication 1, contenant du nona-fluoro-1-butanesulfonate de sodium ou potassium ou du diphényl-sulfone-sulfonate de sodium ou potassium ou un mélange de ceux-ci.

8. Composition selon la revendication 1, **caractérisée en ce qu'**en outre est contenu un agent empêchant la formation de gouttes.

9. Composition selon la revendication 8, **caractérisée en ce que** l'agent empêchant la formation de gouttes est un polytétrafluoroéthylène ou un alliage de polytétrafluoroéthylène.

10. Produit contenant une composition selon la revendication 1.

11. Produit selon la revendication 10, **caractérisé en ce qu'**on obtient le produit dans le procédé de moulage par injection.
